# FASCICULE DE BREVET EUROPEEN

(11) **EP 3 875 545 B1**
(45) Date de publication et mention de la délivrance du brevet: **07.06.2023**
(21) Numéro de dépôt: 21160650.4
(22) Date de dépôt: 04.03.2021
(51) Int. Cl.: C09D 5/02, C09D 7/63, C09D 7/65, C08K 5/00, C08K 5/103, C09D 167/04, C09D 103/00, C09D 101/00, D06M 13/17, D06M 13/224, D06M 15/507, D06M 15/53, D06M 23/08

(54) **UTILISATION D'UNE DISPERSION POUR LE REVÊTEMENT DE TEXTILES**
VERWENDUNG EINER DISPERSION FÜR DIE BESCHICHTUNG VON TEXTILIEN
USE OF A DISPERSION FOR TEXTILE COATING

(30) Priorité: 05.03.2020 BE 202005152
(43) Date de publication de la demande: 08.09.2021
(73) Titulaire: Centexbel, 1000 Brussel (BE)
(72) Inventeur: DEMEDTS, Brecht, 9000 Gent (BE); DE SMET, David, 9900 Eeklo (BE); UYTTENDAELE, Willem, 9042 Desteldonk (BE); VANNESTE, Myriam, 9881 Bellem (BE)
(74) Mandataire: DenK iP bv

(56) Documents cités:
- WO-A1-2011/024023
- JP-A- 2013 194 175
- KR-A- 20200 123 911

## Description

### Domaine technique de l'invention

La présente invention se rapporte à l'utilisation d'une dispersion aqueuse de biopolymères thermoplastiques pour le revêtement de textiles.

### Arrière-plan de l'invention

Il existe plusieurs polymères thermoplastiques biosourcés et biodégradables. Les plus couramment utilisés sont l'acide polylactique (PLA), l'amidon thermoplastique, les uréthanes thermoplastiques biosourcés, les polyamides biosourcés, et les polyhydroxyalcanoates (PHA). La plupart d'entre eux sont couramment utilisés dans les processus d'extrusion ou de moulage par injection. Cependant, il existe peu d'applications de revêtement. Une raison pour ce fait est le manque de formulations qui soit à la fois faciles à appliquer et bon marché.

Le PLA est actuellement le biopolymère thermoplastique le moins cher du marché. Les propriétés du PLA dépendent de son poids moléculaire, mais aussi du rapport des stéréoformes lactide L et D. Alors que le PLA de type L pur est semi-cristallin avec un caractère cristallin marqué, de petites quantités de D-lactide entraînent des qualités de PLA amorphes ou semi-cristallines au caractère cristallin peu marqué. Cela influence la biodégradabilité du PLA, qui est en général biodégradable industriellement, c'est-à-dire à haute température (>60°C).

Le PHA, d'autre part, en tant que polymère synthétisé par des bactéries, est également biodégradable à des températures plus basses (≤60°C) et donc plus adapté à la compostabilité domestique.

Les deux biopolymères sont cassants et des additifs sont typiquement utilisés pour améliorer leur résistance aux chocs ou leur flexibilité. Souvent, des plastifiants sont utilisés pour y parvenir, mais cela entraîne typiquement des problèmes de migration des plastifiants en raison d'une mauvaise compatibilité. Ceci est particulièrement vrai dans le cas du PLA. Le mélange avec d'autres polymères, tels que le polybutylsuccinate (PBS), le polyuréthane (PU), ou le polycaprolactone (PCL) peut également contribuer à améliorer les propriétés des mélanges de PLA.

Actuellement, l'utilisation du PLA dans les revêtements est limitée au revêtement par extrusion sur papier ou carton, principalement pour l'application de gobelets à boissons, mais il existe peu ou pas d'autres applications de substrats revêtus de PLA. Il y a eu des recherches approfondies sur la production de dispersions de PLA, mais ces méthodes nécessitent souvent des solvants ou un traitement spécifique, ce qui les rend coûteuses et peu commercialisables.

Les amidons thermoplastiques sont souvent utilisés dans les applications de film, qui peuvent être laminées sur des substrats à l'aide d'un traitement thermique, comme le calandrage ou les presses à chaud. Les amidons thermoplastiques sont des mélanges d'amidon avec des plastifiants et sont souvent mélangés à des polymères synthétiques biodégradables tels que la polycaprolactone (PCL) ou l'alcool polyvinylique (PVA) afin de faciliter le traitement des mélanges pendant l'extrusion et d'améliorer les caractéristiques des films obtenus. Bien que l'amidon puisse être utilisé comme charge dans des composés ou des formulations de revêtement, l'utilisation de formulations d'amidon thermoplastique dans des revêtements n'est pas largement utilisée lorsque des films résistants sont requis. Lorsqu'il est utilisé comme charge, car il est intrinsèquement biosourcé et biodégradable, il peut contribuer à une fragmentation plus facile des matériaux pendant le compostage. L'amidon en tant que tel est cependant un matériau fragile qui a un impact négatif sur les propriétés des polymères mécaniques dans lesquels il est mélangé.

Les polyhydroxyalcanoates (PHA) comprennent une large famille de biopolymères tels que le polyhydroxybutyrate (PHB), le poly (3-hydroxybutyrate-co-3-hydroxyvalérate) (PHBV), et le poly (3-hydroxybutyrate-co-3-hydroxyhexanoate) (PHBH) entre autres. Ce sont des polymères produits par des micro-organismes ou des plantes. Ces polymères sont facilement biodégradables dans des environnements humides. Le PHA est un biopolymère thermoplastique souvent hétérogène. Il est assez cher par rapport à l'amidon ou au PLA et son utilisation est donc limitée aux produits et emballages spécialisés. Même s'il est plus flexible que le PLA, il est encore assez rigide et est typiquement utilisé avec des plastifiants ou comme mélange avec d'autres polymères lorsqu'une flexibilité est requise. JP2013194175A divulgue un matériau composite fabriqué par adhésion d'un polymère tel que le PLA ou le PHA sur une fibre conductrice.

La combinaison de poudres de polymères thermoplastiques et de plastifiants dans des pâtes de revêtement ou dans des encres est communément connue sous le nom de plastisols et bien connue dans le domaine des encres et des revêtements PVC. Lorsque les températures montent au-dessus de la température de gélification, ces formulations fusionnent lorsque le plastifiant est absorbé par la poudre de polymère et lors du refroidissement, un polymère solide est obtenu. Il existe de nombreuses applications pour les plastisols, telles que le revêtement, le trempage, la coulée, le moulage (par embouage) et autres. Selon la quantité de plastifiant utilisé, une flexibilité plus élevée peut être obtenue.

L'utilisation du PVC est actuellement critiquée en raison de sa persistance, de son incapacité à se biodégrader et de l'utilisation (historique) d'additifs parfois nocifs, tels que des plastifiants toxiques, des stabilisants thermiques toxiques et autres. Les formulations de plastisol PVC sont largement utilisées sur différents marchés, tels que les revêtements de sol en vinyle, les encres de sérigraphie, les revêtements de fils, le papier peint, les panneaux, les supports de tapis, les articles gonflables, les emballages, les jouets et autres qui peuvent utiliser différentes méthodes d'application telles que le revêtement direct, l'enduction par transfert, l'enduction par immersion, la sérigraphie, la coulée, le moulage ou le moulage par embouage. Selon les marchés, différents plastifiants (ou leurs mélanges) et additifs sont utilisés en fonction des propriétés mécaniques souhaitées. En particulier, l'utilisation de plastifiants toxiques à base de phtalate a contribué à la mauvaise réputation des plastisols de PVC et de nombreux nouveaux plastifiants ont été développés qui sont plus respectueux de l'environnement, y compris les biosourcés, mais il n'existe aucune formulation de plastisol entièrement biosourcée qui soit actuellement commercialisée.

Il existe donc toujours un besoin dans la technique pour des formulations à base de biopolymères thermoplastiques qui puissent être utilisées pour le revêtement de textiles et qui surmontent un ou plusieurs des inconvénients ci-dessus.

### Résumé de l'invention

Un objet de la présente invention est l'utilisation de dispersions aqueuses à base de biopolymères thermoplastiques pour le revêtement de textiles, ainsi qu'un procédé de revêtement, un revêtement, et un substrat textile revêtu dudit revêtement.

L'objectif ci-dessus est atteint par une dispersion, une méthode, un procédé, des utilisations, et des objets selon la présente invention.

Dans un premier aspect, la présente invention se rapporte à l'utilisation d'une dispersion pour le revêtement de textiles, la dispersion comprenant une poudre dispersée dans un milieu aqueux, ladite poudre comprenant un biopolymère thermoplastique plastifié avec un acide gras éthoxylé et un plastifiant différent dudit acide gras éthoxylé.

Dans un second aspect, la présente invention se rapporte à un procédé de revêtement d'un substrat textile comprenant l'application sur ledit substrat d'une dispersion comprenant une poudre dispersée dans un milieu aqueux, ladite poudre comprenant un biopolymère thermoplastique plastifié avec un acide gras éthoxylé et un plastifiant différent dudit acide gras éthoxylé.

Dans un troisième aspect, la présente invention se rapporte à un revêtement sur un substrat textile, comprenant un biopolymère thermoplastique plastifié avec un acide gras éthoxylé et un plastifiant différent dudit acide gras éthoxylé.

Dans un quatrième aspect, la présente invention peut donc également se rapporter à un substrat textile revêtu d'un revêtement selon un mode de réalisation quelconque du troisième aspect.

C'est un avantage des modes de réalisation de la présente invention que les dispersions comprennent des composants d'origine biologique. Cela permet de limiter l'utilisation de matériaux d'origine fossile dont les sources se raréfient. De plus, les composants d'origine biologique utilisables dans la présente invention sont souvent biodégradables et comprennent peu ou pas de solvants organiques. Cela renforce l'aspect écologique des dispersions de la présente invention.

C'est un avantage de certains modes de réalisation de la présente invention que les dispersions peuvent former des revêtements sur substrat textile, dans lesquels la migration des plastifiants est faible, ce qui est favorable à l'environnement.

C'est un avantage de certains modes de réalisation de la présente invention que les dispersions forment des revêtements sur substrat textile en un temp relativement court.

C'est un avantage de certains modes de réalisation de la présente invention que les dispersions sont relativement stables.

C'est un avantage de certains modes de réalisation de la présente invention que la mise en oeuvre des dispersions est relativement aisée.

C'est un avantage de certains modes de réalisation de la présente invention que les revêtements obtenus peuvent être lavé à l'eau avec peu ou pas de dégradation.

C'est un avantage de certains modes de réalisation de la présente invention que les revêtements obtenus résistent bien à l'abrasion.

C'est un avantage de certains modes de réalisation de la présente invention que les revêtements obtenus peuvent être rendus mat, brillant, ou en relief.

Des aspects particuliers et préférés de l'invention sont exposés dans les revendications indépendantes et dépendantes ci-après. Les caractéristiques des revendications dépendantes peuvent être combinées avec les caractéristiques des revendications indépendantes et avec les caractéristiques d'autres revendications dépendantes, le cas échéant, et pas simplement comme explicitement exposé dans les revendications.

Bien qu'il y ait eu une amélioration, un changement et une évolution constants des formulations dans ce domaine, les présents concepts représentent des améliorations substantiellement nouvelles, y compris des écarts par rapport aux pratiques antérieures, résultant en la fourniture de formulations plus efficaces, stables et fiables de cette nature.

Les caractéristiques et avantages ci-dessus et d'autres de la présente invention deviendront apparents à partir de la description détaillée suivante. Cette description est donnée à titre d'exemple uniquement, sans limiter la portée de l'invention.

### Description des modes de réalisation illustratifs

La présente invention sera décrite par rapport à des modes de réalisation particuliers mais l'invention n'est pas limitée à ceux-ci mais uniquement par les revendications.

En outre, les termes premier, deuxième, troisième et similaires dans la description et dans les revendications sont utilisés pour distinguer des éléments similaires et pas nécessairement pour décrire une séquence, soit temporellement, spatialement, dans le classement ou de toute autre nature. Il doit être entendu que les termes ainsi utilisés sont interchangeables dans des circonstances appropriées et que les modes de réalisation de l'invention décrits ici peuvent fonctionner dans d'autres séquences que celles décrites ou illustrées ici.

De plus, les termes haut, bas, dessus, dessous et similaires dans la description et les revendications sont utilisés à des fins descriptives et pas nécessairement pour décrire des positions relatives. Il doit être entendu que les termes ainsi utilisés sont interchangeables dans des circonstances appropriées et que les modes de réalisation de l'invention décrits ici peuvent fonctionner dans d'autres orientations que celles décrites.

Il convient de noter que le terme « comprenant », utilisé dans les revendications, ne doit pas être interprété comme étant limité aux moyens énumérés par la suite; il n'exclut pas d'autres éléments ou étapes. Il doit donc être interprété comme spécifiant la présence des caractéristiques, des nombres entiers, des étapes ou des composants mentionnés, mais n'exclut pas la présence ou l'ajout d'une ou de plusieurs autres caractéristiques, nombres entiers, étapes ou composants, ou groupes de ceux-ci. Le terme « comprenant » couvre donc la situation où seules les caractéristiques énoncées sont présentes et la situation où ces caractéristiques et une ou plusieurs autres caractéristiques sont présentes. Le mot « comprenant » selon l'invention comprend donc également comme mode de réalisation qu'aucun autre composant n'est présent. Ainsi, la portée de l'expression « un dispositif comprenant les moyens A et B » ne doit pas être interprétée comme étant limitée aux dispositifs constitués uniquement des composants A et B. Cela signifie qu'en ce qui concerne la présente invention, les seuls composants pertinents du dispositif sont A et B.

La référence dans cette description à « un mode de réalisation » signifie qu'une structure ou une caractéristique particulière décrite en relation avec le mode de réalisation est incluse dans au moins un mode de réalisation de la présente invention. Ainsi, les apparitions de l'expression « dans un mode de réalisation » à divers endroits de cette description ne se réfèrent pas nécessairement toutes au même mode de réalisation, mais peuvent l'être. En outre, les éléments, structures ou caractéristiques particuliers peuvent être combinés de toute manière appropriée, comme cela apparaîtra à l'homme du métier à partir de cette description, dans un ou plusieurs modes de réalisation.

De même, il convient de noter que dans la description d'exemples de modes de réalisation de l'invention, diverses caractéristiques de l'invention sont parfois regroupées dans un seul mode de réalisation, ou description de celles-ci dans le but de rationaliser la divulgation et d'aider à la compréhension d'un ou davantage des divers aspects inventifs. Toutefois, cette méthode de divulgation ne doit pas être interprétée comme reflétant une intention selon laquelle l'invention revendiquée requiert plus de caractéristiques que celles expressément énoncées dans chaque revendication. Au contraire, comme le reflètent les revendications suivantes, les aspects inventifs résident dans moins que toutes les caractéristiques d'un seul mode de réalisation décrit ci-dessus. Ainsi, les revendications suivant la description détaillée sont expressément incorporées dans cette description détaillée, chaque revendication étant autonome en tant que mode de réalisation séparé de la présente invention.

De plus, bien que certains modes de réalisation décrits ici comprennent certaines mais pas d'autres caractéristiques incluses dans d'autres modes de réalisation, des combinaisons de caractéristiques de différents modes de réalisation sont dans la portée de l'invention, et forment des modes de réalisation différents, comme le comprendra l'homme du métier. Par exemple, dans les revendications suivantes, n'importe lequel des modes de réalisation revendiqués peut être utilisé dans n'importe quelle combinaison.

Dans la description fournie ici, de nombreux détails spécifiques sont présentés. Cependant, il est entendu que des modes de réalisation de l'invention peuvent être mis en pratique sans ces détails spécifiques. Dans d'autres cas, des méthodes, structures et techniques bien connues n'ont pas été présentées en détail afin de ne pas obscurcir la compréhension de cette description.

Les termes suivants sont fournis uniquement pour aider à la compréhension de l'invention.

Tel qu'utilisé ici, et sauf indication contraire, les termes « *biosourcé* » et « *d'origine biologique* » sont considérés comme des synonymes et, lorsqu'ils sont appliqués à un matériau, signifient que ce matériau est au moins en partie issu de bio ressources, c'est-à-dire issu exclusivement d'organismes vivants, généralement végétaux, ou est synthétisé à partir de ressources renouvelables, généralement végétales. Typiquement, un tel matériaux biosourcé a une teneur en carbone biosourcé d'au moins 20%, de préférence au moins 50%, encore plus préférablement au moins 90%, et plus préférablement 100%, cette teneur en carbone biosourcé pouvant être déterminée par la méthode A de la norme ASTM D6866-12: 2008. Cette méthode utilise la méthode du carbone 14 opérée sur un échantillon du matériau. Étant donné que le rapport des isotopes du carbone peut encore être déterminé après le processus de production, une distinction entre fossile et biosourcé est possible. Bien sûre, lorsque la méthode de synthèse du matériau est connue et n'utilise pas de produit d'origine fossile, il est possible de conclure que le matériau est biosourcé sans devoir faire une analyse isotopique de ce dernier. Les produits biosourcés peuvent être constitués entièrement ou partiellement de matières premières biosourcées.

Tel qu'utilisé ici, un biopolymère est un polymère biosourcé.

L'invention va maintenant être décrite par une description détaillée de plusieurs modes de réalisation de l'invention. Il est clair que d'autres modes de réalisation de l'invention peuvent être configurés selon les connaissances de l'homme du métier sans s'écarter de l'enseignement technique de l'invention, l'invention n'étant limitée que par les termes des revendications.

D'autres dispositions pour atteindre les objectifs de l'invention seront évidentes pour l'homme du métier.

Dans un premier aspect, l'invention concerne l'utilisation d'une dispersion pour le revêtement de textiles, la dispersion comprenant une poudre dispersée dans un milieu aqueux, ladite poudre comprenant un biopolymère thermoplastique plastifié avec un acide gras éthoxylé et un plastifiant différent dudit acide gras éthoxylé.

Au moins deux plastifiants sont donc utilisés : un acide gras éthoxylé et un plastifiant différent dudit acide gras éthoxylé.

C'est un avantage de la présence de l'acide gras éthoxylé qu'il réduit la migration du deuxième plastifiant. Sans être lié par la théorie, on pense que cela est dû à la formation de micelles dans la dispersion.

Selon un mode de réalisation, la granulométrie de la poudre peut être de 100nm à 2mm. Il est avantageux d'utiliser une granulométrie aussi petite que possible car elle permet de former des revêtements continus plus fins.

Les poudres peuvent être achetées telles quelles ou peuvent être obtenues par pulvérisation de matériaux plus grossiers tels que des granulés.

Par exemple, les biopolymères thermoplastiques peuvent-être entre autres choisis parmi le PLA, le PHA (par exemple du polyhydroxybutyrate (PHB), du polyhydroxybutyrate-co-hydroxyvalérate (PHBV), du polyhydroxyvalérate (PHV), ou du poly (3-hydroxybutyrate-co-3-hydroxyhexanoate) (PHBH)), le polyglycolide (PGA), le poly (DL-lactide-co-glycolide) (PGLA), des polysaccharides (par exemple, les homopolysaccharides et les hétéropolysaccharides), des polysaccharides modifiés tels que les celluloses polysaccharides, des copolyesters aliphatiques et aromatiques, du poly (1,4-butylène succinate) (PBS), du polyamide, du poly (1,4-butylène adipate) (PBA), du poly (adipate de succinate de butylène) (PBSA), des polyanhydrides tels que poly (acide sébacique-co-hexade anhydride d'acide candioïque) (poly (anhydride SA-HDA), les polyorthoesters (POE), les polyesters aliphatiques à base d'amidon, et des polyesteramides (PEA). De même, des combinaisons (par exemple, des mélanges) sont comprises, de même que des copolymères comprenant ce qui précède.

Selon un mode de réalisation préféré du premier aspect de la présente invention, le biopolymère thermoplastique peut être choisi parmi un PLA, un PHA, et leurs mélanges.

Des exemples de poudres de PLA appropriées sont commercialement disponibles auprès de LyondellBasell (par exemple Schularene), Axalta (par exemple Coathylene), et Fixatti (par exemple PLA 239V).

Des exemples de poudres de PHA appropriées sont commercialement disponibles auprès de TianAn Biopolymer (PHBV), et Kaneka (PHBH).

Le PHA peut par exemple être sélectionné parmi le PHB, le PHPB, le PHBH, et le PHV.

Selon un mode de réalisation du premier aspect de la présente invention, le biopolymère thermoplastique peut comprendre un mélange d'un PHA et d'un PLA dans lequel le PHA représente de 1 à 40% en poids du mélange. Ceci est avantageux car cela réduit la tendance à la migration des plastifiants. Un avantage supplémentaire est que la compostabilité du revêtement est plus élevé qu'en absence de PHA.

Dans ce mode de réalisation, de préférence, le PHA peut représenter de 1 à 30% en poids, plus préférablement de 1 à 20% en poids, encore plus préférablement de 1 à 10% en poids, et le plus préférablement de 1 à 5% en poids du mélange.

Dans ce mode de réalisation, le PHA est de préférence du PHBV.

Dans un mode de réalisation du premier aspect de la présente invention, lorsque le biopolymère thermoplastique comprend du PLA, le PLA peut représenter de 10 à 80%, préférablement de 20 à 40% en poids de la dispersion.

Dans un mode de réalisation du premier aspect de la présente invention, lorsque le biopolymère thermoplastique comprend du PHA, le PHA peut représenter de 1 à 50% en poids, préférablement de 1 à 10%, plus préférablement de 1 à 5%, encore plus préférablement 1 à 3% de la dispersion. Lorsque le PHA représente moins de 10% en poids de la dispersion, au moins un autre biopolymère thermoplastique, tel que le PLA, est présent.

Selon un mode de réalisation préféré du premier aspect de la présente invention, le plastifiant différent dudit acide gras éthoxylé peut être un plastifiant d'origine biologique. Cela permet de limiter l'utilisation de matériaux d'origine fossile dont les sources se raréfient.

Selon un mode de réalisation du premier aspect de la présente invention, le plastifiant différent dudit acide gras éthoxylé peut être un plastifiant biodégradable. Cela est préférable afin d'assurer une meilleure biodégradabilité de la dispersion et de ses produits. Des exemples de plastifiants différent dudit acide gras éthoxylé et biodégradables sont la triacétine, un ester d'acide citrique, un éther d'ester d'acide citrique , un ester d'acide levulinique, un mono-ou diglycéride acétylé, un ester d'acide adipique, un polyethylene glycol, le dibenzoate de diéthylène glycol, le dibenzoate de dipropylène glycol, le dibenzoate de triéthylène glycol, et leurs mélanges tel qu'une masse réactionnelle de dibenzoate de diéthylène glycol, dibenzoate de dipropylène glycol, et dibenzoate de triéthylène glycol (commercialisée sous le nom Benzoflex^{™} 2088 (Eastman)).

Selon un mode de réalisation du premier aspect de la présente invention, le plastifiant d'origine biologique peut être choisi parmi la triacétine, un ester d'acide citrique, un éther d'ester d'acide citrique, un ester d'acide levulinique, un mono- ou diglycéride acétylé, un ester d'acide adipique, un polyethylene glycol, et leurs mélanges.

Selon un mode de réalisation préféré du premier aspect de la présente invention, le plastifiant différent dudit acide gras éthoxylé peut être un plastifiant d'origine biologique et biodégradable. Des exemples de plastifiants différent dudit acide gras éthoxylé et biodégradable et d'origine biologique sont la triacétine, et un ester d'acide citrique, un éther d'ester d'acide citrique, un ester d'acide levulinique, un mono- ou diglycéride acétylé, un ester d'acide adipique, un polyethylene glycol, et leurs mélanges.

De préférence, le plastifiant différent de l'acide gras éthoxylé est la triacétine (par exemple disponible chez Eastman).

Selon un mode de réalisation du premier aspect de la présente invention, l'acide gras éthoxylé peut avoir une formule générale RC(O)O[-C₂O]ₙ-H dans laquelle R est un radical aliphatique ayant de 10 à 24 atomes de carbone et dans laquelle n est de 20 à 1800, de préférence de 200 à 1000.

Selon un mode de réalisation du premier aspect de la présente invention, l'acide gras éthoxylé peut être un monooléate de polyéthylène glycol.

Selon un mode de réalisation du premier aspect de la présente invention, l'acide gras éthoxylé peut avoir une masse moléculaire de 450 à 1800 g/mol.

Selon un mode de réalisation du premier aspect de la présente invention, l'acide gras éthoxylé peut représenter de 40 à 60% en poids de l'ensemble comprenant l'acide gras éthoxylé et le plastifiant différent dudit acide gras éthoxylé.

Selon un mode de réalisation du premier aspect de la présente invention, l'ensemble comprenant l'acide gras éthoxylé et le plastifiant différent dudit acide gras éthoxylé peut représenter de 4 à 70%, préférablement de 4 à 50%, plus préférablement de 4 à 24%, plus préférablement de 6 à 16% en poids de la dispersion.

Selon un mode de réalisation du premier aspect de la présente invention, l'acide gras éthoxylé peut représenter de 2 à 35%, préférablement de 3 à 12%, plus préférablement de 3 à 8% en poids de la dispersion.

Selon un mode de réalisation du premier aspect de la présente invention, le plastifiant différent dudit acide gras éthoxylé peut représenter de 2 à 35%, préférablement de 3 à 12%, plus préférablement de 3 à 8% en poids de la dispersion.

Selon un mode de réalisation du premier aspect de la présente invention, le biopolymère thermoplastique peut représenter de 10 à 80%, préférablement de 10 à 60%, plus préférablement 20 à 43% en poids de la dispersion.

Dans des modes de réalisation, le biopolymère thermoplastique peut avoir une masse moléculaire moyenne en nombre de 10000 g / mol à 300000 g / mol.

Selon un mode de réalisation du premier aspect de la présente invention, l'eau peut représenter de 10 à 85%, préférablement de 15 à 80%, plus préférablement de 30 à 50% en poids de la dispersion.

Selon un mode de réalisation du premier aspect de la présente invention, lorsque l'ensemble comprenant l'acide gras éthoxylé et le plastifiant différent dudit acide gras éthoxylé représente de 26 à 70% en poids de la dispersion, l'eau peut représenter de 10 à 45% en poids de la dispersion.

Selon un mode de réalisation préféré du premier aspect de la présente invention, lorsque l'ensemble comprenant l'acide gras éthoxylé et le plastifiant différent dudit acide gras éthoxylé représente de 4 à 25% en poids, préférentiellement de 5 à 14% en poids de la dispersion, l'eau peut représenter de 46 à 85% en poids de la dispersion. Ce mode de réalisation est particulièrement adapté à une utilisation dans le revêtement de textiles ou l'impression sur textile.

Dans des modes de réalisation, la dispersion du premier aspect peut en outre comprendre un ou plusieurs additifs. Les additifs peuvent être biosourcés ou non. Ils sont de préférence biosourcés. La dispersion comprend de préférence au plus 5% d'additifs non biosourcés.

Dans des modes de réalisation, les additifs peuvent représenter jusqu'à 50% de la dispersion. De préférence, ils représentent de 0 à 20% de la dispersion. Des exemples d'additifs sont les modificateurs de rhéologie, les colorants, les pigments, les réticulants, les agents antimicrobiens, les déaerateurs, les antimousses, les retardateurs de flamme, les agents antistatiques, les agents de nivellement, les agents mouillants, les agents anticoagulants, les promoteurs d'adhérence et les charges.

Le modificateur de rhéologie est de préférence présent en une quantité de 0 à 2% en poids, de préférence de 0,5 à 2% en poids.

Des exemples de modificateurs de rhéologie appropriés sont les épaississants. Les modificateurs de rhéologie préférés sont biosourcés. Des exemples d'épaississants biosourcés appropriés sont les polysaccharides tels que l'amidon, l'amidon modifié, l'alginate, la carraghénane, la cellulose et la cellulose modifiée (par exemple un éther de cellulose tel que l'hydroxyéthylcellulose). Des exemples d'épaississants non biosourcés appropriés sont les polyacrylates tels que les copolymères d'acide méthacrylique et d'ester d'acrylate d'éthyle, ainsi que des polyurethanes tel que des polyuréthanes éthoxylés hydrophobiquement modifiés.

Les épaississants thixotropes sont préférés car ils stabilisent la dispersion.

Dans des modes de réalisation, la dispersion du premier aspect peut être appliquée sous la forme d'un revêtement ou d'une encre. Dans le cas d'une formulation d'encre, la dispersion comprend un colorant ou un pigment comme additif. Un pigment est préféré car il a généralement une tendance plus faible à migrer en présence d'eau qu'un colorant. Un exemple de pigment blanc est le dioxyde de titane. Le dioxyde de titane peut également être considéré comme un opacifiant. Le dioxyde de titane est avantageux pour augmenter l'opacité du film ou de l'impression obtenue.

Dans des modes de réalisation, la dispersion peut comprendre un agent réticulant comme additif.

Un agent réticulant peut être ajoutés aux formulations afin d'obtenir un film réticulé plus densément. La réticulation conduit à une hydrolyse plus lente et peut en tant que telle être utilisée pour modifier non seulement la résistance des films, mais également la vitesse de (bio)dégradation. Les réticulants utilisés sont de préférence des polymères carbodiimides (par exemple Carbodilite par Nisshinbo) ou des polymères isocyanates (par exemple Desmodur par Covestro) à des concentrations comprises entre 0.1 et 10%. Il existe des réticulants spécifiques (par exemple, des isocyanates bloqués ou des carbodiimides à base d'eau) qui permettent une durée de vie en pot plus longue dans des applications telles que les encres.

Dans des modes de réalisation, la dispersion peut comprendre une charge comme additif. La charge peut être organique ou inorganique. La charge peut être d'origine biologique ou non.

Les charges jouent généralement simplement un rôle de diluent solide et réduisent les coûts de la dispersion.

Des exemples de charges comprennent la struvite, la lignine, le liège, le bois, la pâte de bois, la craie, l'hydroxyde de magnésium, l'hydroxyapatite, entre autres.

La dispersion du premier aspect peut en outre comprendre un solvant organique. Des exemples de solvants organiques appropriés sont des solvants ayant un point d'ébullition de 100 °C à 180 °C

Le solvant organique est typiquement présent en une quantité de 0 à 10%, de préférence de 0 à 5%, plus préférablement de 0 à 3% en poids de la dispersion. Plus préférablement, aucun solvant organique n'est présent. Lorsqu'un solvant organique est présent, il peut avoir l'avantage d'améliorer la fusion du revêtement.

La dispersion du premier aspect peut en outre comprendre un polymère non biosourcé. Des exemples de polymères non biosourcés appropriés sont les polyuréthanes, les polyacrylates et le polyvinylalcohol. Les polymères non biosourcés utilisés dans la présente invention se présentent de préférence sous la forme d'une poudre dispersée dans un milieu aqueux (c'est-à-dire, une dispersion aqueuse).

Ci-après, une méthode pour la préparation d'une dispersion telle qu'utilisée dans le premier aspect premier aspect est décrite. Il est possible de réaliser une dispersion telle qu'utilisée dans n'importe quel mode de réalisation du premier aspect en mélangeant les différents composant dans n'importe quel ordre. Préférablement, cette méthode comprend les étapes suivantes, dans l'ordre :
i. Mélanger l'acide gras éthoxylé et le plastifiant différent dudit acide gras éthoxylé dans de l'eau afin d'obtenir une émulsion,
ii. Ajouter une poudre du biopolymère thermoplastique à l'émulsion afin de former une dispersion d'une poudre dans de l'eau, dans laquelle la poudre présente dans la dispersion comprend le biopolymère thermoplastique plastifiée avec l'acide gras éthoxylé et le plastifiant différent dudit acide gras éthoxylé.

Dans des modes de réalisation, lorsque des poudres de PHA et de PLA sont fournies à l'étape ii, il est préférable d'introduire d'abord du PHA, puis de mélanger de préférence avec un mélangeur à cisaillement élevé, puis seulement d'introduire du PLA. Cela évite la coagulation de la poudre de PHA.

Les additifs facultatifs peuvent de préférence être ajoutés pendant l'étape ii ou après l'étape ii.

Dans un second aspect, la présente invention se rapporte à un procédé de revêtement d'un substrat textile comprenant l'application sur ledit substrat d'une dispersion comprenant une poudre dispersée dans un milieu aqueux, ladite poudre comprenant un biopolymère thermoplastique plastifié avec un acide gras éthoxylé et un plastifiant différent dudit acide gras éthoxylé.

Dans un mode de réalisation du second aspect, le revêtement peut être suivit d'un traitement thermique (par exemple à une température d'au moins 100 °C). Par exemple, le revêtement peut être suivit d'un séchage à une température de 100 à 125°C, suivit d'une gélification à une température de 110°C à 210°C, de préférence de 150°C à 200°C, plus préférentiellement de 170°C à 190°C.

La durée du séchage peut par exemple être de 1 à 5 minutes. Par exemple, de 2 à 4 minutes, et de préférence de 3 à 4 minutes.

La durée de la gélification peut par exemple être de 1 à 3 minutes, de préférence de 2 à 3 minutes.

Dans un mode de réalisation du second aspect, le traitement thermique peut consister en un unique traitement à une température de 150°C à 210°C, de préférence de 160°C à 200°C, plus préférentiellement de 170°C à 190°C. La durée de ce traitement peut par exemple être de 2 à 4 minutes. Ce mode de réalisation qui combine gélation et séchage en une seule étape est plus rapide qu'en présence d'un séchage à part mais produit un revêtement qui est typiquement de moins bonne qualité (par exemple, présence de bulles). Aussi, ce traitement demande un budget thermique plus important et est donc plus cher.

Dans certains modes de réalisation du second aspect, le traitement thermique peut être un calandrage, un laminage ou une presse à chaud. Le calandrage permet d'obtenir des revêtements lisses. Le laminage et le pressage à chaud permettent de former des composites.

Dans certains modes de réalisation du second aspect, le revêtement obtenu peut être rendu mat ou gaufré en recouvrant le revêtement d'un papier siliconé texturé pendant le traitement thermique.

Dans des modes de réalisation, le revêtement peut former une couche continue ou peut former un motif d'impression. Dans ce dernier cas, le revêtement est une impression. Dans des modes de réalisation, l'impression peut être effectuée par sérigraphie ou impression à jet d'encre. L'imprimante à jet d'encre est susceptible de se boucher en raison d'un séchage rapide, mais la dispersion de la présente invention, étant à base d'eau, sèche plus lentement que les formulations à base de solvant et entraîne moins de colmatage. Lorsque l'impression est réalisée par sérigraphie, la dispersion comprend de préférence un épaississant.

Dans des modes de réalisation, le procédé peut comprendre le revêtement de deux substrats, au moins l'un d'eux étant un substrat textile, puis la mise en contact du revêtement de chaque substrat l'un avec l'autre et l'application de chaleur et / ou de pression pour former un stratifié. Dans de tels modes de réalisation, l'ensemble comprenant l'acide gras éthoxylé et le plastifiant différent dudit acide gras éthoxylé peut de préférence représenter de 4 à 35%, plus préférentiellement de 4 à 16% de la dispersion. Ceci est avantageux car un plus petit pourcentage de plastifiant promeut une meilleure adhésion.

Dans des modes de réalisation, le revêtement peut être effectué directement, par exemple par application à la racle, ou peut être effectué par transfert. Le revêtement obtenu directement, par exemple par application à la racle, peut être réalisé dans des épaisseurs comprises entre 50 et 2000 µm, de préférence de 100 à 1000 µm et encore plus préférentiellement de 200 à 400 µm avant traitement thermique.

Dans des modes de réalisation, le revêtement résultant du traitement thermique peut avoir une épaisseur d'au moins 200 µm. Bien qu'une épaisseur de revêtement plus petite puisse être ciblée, une épaisseur d'au moins 200 µm permet d'obtenir un film uniforme (par exemple sans trous).

Dans des modes de réalisation, le substrat textile peut être tout substrat textile. Par exemple, il peut-être un textile tissé ou nontissé. Toute caractéristique du second aspect peut être telle que décrite de manière correspondante dans le premier aspect de la présente invention.

Selon un mode de réalisation l'invention peut concerner l'utilisation d'une dispersion pour le revêtement de textiles par calandrage ou sérigraphie, la dispersion comprenant une poudre dispersée dans un milieu aqueux, ladite poudre comprenant un biopolymère thermoplastique plastifié avec un acide gras éthoxylé et un plastifiant différent dudit acide gras éthoxylé.

Dans un troisième aspect, la présente invention se rapporte à un revêtement sur un substrat textile comprenant un biopolymère thermoplastique plastifié avec un acide gras éthoxylé et un plastifiant différent dudit acide gras éthoxylé.

Toute caractéristique du troisième aspect peut être telle que décrite de manière correspondante dans le premier ou second aspect de la présente invention.

Dans un quatrième aspect, la présente invention peut donc également se rapporter à un substrat textile revêtu d'un revêtement selon un mode de réalisation quelconque du troisième aspect.

### Exemple 1 Application directe de revêtement (PLA)

| 59g d'eau | |
|---|---|
| 6g de PEG600 monooleate (radiasurf 7404, Oleon | Plastifiant/tensioactif |
| 6g de triacétine (Eastman) | Bioplastifiant |
| 28g de Schularene N3102 (LyondellBasell) | PLA en poudre |
| 0.9g de thixogum S | Polysaccharide, épaississant thixotrope |

De l'eau a été ajoutée à un bêcher, 6 g de monooléate PEG600 ont été ajoutés et agités en utilisant un disque de dispersion. De la triacétine a été ajoutée et mélangée en une émulsion. De la poudre de PLA a été ajoutée pendant une agitation douce et la dispersion a été épaissie en utilisant un épaississant polysaccharidique.

Les revêtements ont été appliqués à une épaisseur de 400 µm sur un substrat textile, séchés en étuve à 110 ° C avant d'être gélifiés à 180 ° C pendant 2 minutes. Un revêtement rugueux mais continu a été obtenu.

Les revêtements textiles ont ensuite été recouverts d'une feuille de téflon et pressés dans une ligne de presse Meyerbelt KFK-E1500 avec une hauteur de 1 mm, une pression de 10 N / cm³ au niveau de 0 mm et une vitesse de 3 m / min et une température de 190 ° C. Le résultat a été un revêtement textile avec une surface lisse. L'échantillon peut également être gaufré dans les mêmes conditions mais en recouvrant les revêtements d'un papier siliconé texturé.

Les revêtements peuvent être laminés sur du carton nid d'abeille à l'aide d'une presse Meyerbelt. Par conséquent, un carton en nid d'abeille a été recouvert des deux côtés d'un tissu enduit et laminé à une température de 190 ° C, une pression de 7 N / m², une vitesse de 0,5 m / min à l'aide d'une presse à double bande (presse Meyerbelt KFK-E-1500 ).

Plusieurs revêtements textiles peuvent être pressés ensemble pour former un panneau composite, en utilisant soit une presse composite, soit une meyerbelt (réglages similaires à ceux ci-dessus).

Les revêtements étaient résistants à l'eau, durables et flexibles.

Aucune migration de plastifiant n'a été observée.

Les revêtements se dégradent et disparaissent visuellement lorsqu'ils sont enfouis dans un sol humide et conservés pendant 1 mois à 28 ° C.

Lorsque la combinaison de plastifiant a été changée pour 12 g Radia 7909 (bioplastifiant de chimie différente), les revêtements étaient toujours intacts après les avoir durcis dans un sol humide et conservés pendant 1 mois à 28 ° C.

### Exemple 2 Application de sérigraphie (PLA)

| 42g d'eau | |
|---|---|
| 4.3g de PEG600 monooleate (radiasurf 7404, Oleon) | Plastifiant / tensioactif |
| 4.3g de triacétine (Eastman) | Bioplastifiant |
| 20g de Coathylene GC2561 (Axalta) | PLA en poudre |
| 2.5g d'oxide de titane (Tronox) | Pigment blanc |
| 0.5g thixogum S (Nexira) | Polysaccharide, Épaississant thixotrope |
| 0.5g Arbocel P3500 (Rettenmaier) | Épaississant cellulosique thixotrope |
| 0.1g Tego airex 900 (Evonik) | Désaérateur |
| 0.5g indigo carminé (Sigma Aldrich) | Colorant |

De l'eau a été ajoutée à un bêcher, du monooléate PEG600 a été ajouté et agité en utilisant un disque de dispersion. De la triacétine a été ajoutée et une émulsion a été réalisée en agitant davantage. La poudre de PLA et le pigment blanc ont été ajoutés. Deux types d'épaississants ont été ajoutés, un polysaccharide et un à base de cellulose (l'arbocel P3500 améliore la qualité des impressions). Du Tego airex a été ajouté comme désaérateur pour l'air emprisonné et la pâte a été colorée avec du carmin d'indigo.

Les impressions ont été réalisées sur un substrat textile à l'aide d'un écran à grande maille (par exemple Sefar PET1500 type 32 / 83-70 PW). La pâte a été séchée dans un four à 110 ° C pendant 2 minutes avant de durcir à 185 ° C pendant 2 minutes.

L'impression obtenue présente une excellente résistance à l'abrasion (70 000 cycles selon ISO 12947-2) et résiste au lavage à 30 ° C (selon ISO 6330, 5 cycles de lavage domestique).

### Exemple 3 Revêtement direct, mélange avec du PU

| 45g d'eau | |
|---|---|
| 14.5g d'Impranil ECO DLS (Covestro) | Dispersion PU avec 50% de biocontenu |
| 0.6g de desmodur DN (covestro) | Réticulant polyisocyanate |
| 4.3g de radiasurf 7404 | Plastifiant/tensioactif |
| 4.3g de triacétine | Bioplastifiant |
| 20g de schularene N3102 (LyondellBasell) | PLA en poudre |
| 5g de poudre de bois | Charge biosourcée |
| 0.3g de thixogum S (Nexira) | Épaississant cellulosique thixotrope |

De l'eau a été ajoutée à un bêcher, le PUD, le réticulant, les plastifiants ont ensuite été ajoutés et agités avec un disque de dispersion. De la poudre de PLA et de la poussière de bois ont ensuite été ajoutées sous agitation douce avant que la pâte ne soit épaissie à l'aide d'un épaississant polysaccharidique.

Les revêtements ont été appliqués avec une épaisseur de 400 µm sur un substrat textile, séchés en étuve à 110 ° C avant d'être gélifiés à 180 ° C pendant 2 minutes. Un revêtement rugueux mais continu a été obtenu.

Les revêtements textiles ont ensuite été recouverts d'une feuille de téflon et pressés dans une ligne de presse Meyerbelt KFK-E1500 avec une hauteur de 1 mm, une pression de 10 N / cm³ au niveau de 0 mm et une vitesse de 3 m / min et une température de 190 ° C. Le résultat a été un revêtement textile avec une surface lisse. L'échantillon peut également être gaufré dans les mêmes conditions mais en recouvrant les revêtements d'un papier siliconé texturé.

Il en résulte des revêtements avec une teneur biosourcée > 90%. Les revêtements étaient étanches et résistants.

### Exemple 4 revêtement direct (PHBV)

| 111g d'eau | |
|---|---|
| 0,5g de coatosil 1220 | Tensioactif |
| 16g de dioléate de PEG 300 | Plastifiant/tensioactif |
| 16g de benzoflex 2088 | Plastifiant biodégradable |
| 30g de ENMAT Y1000 | PHBV en poudre |
| 0,5g de Respumit NF 01 | Antimousse |
| 0,8g de thixogum S | Épaississant cellulosique thixotrope |

111g d'eau ont été ajouté à un bécher et du coatosil 1220, du dioléate de PEG 300, et du benzoflex 2088 y ont été ajoutés. La poudre de PHBV y a été ajoutée et mélangée à l'aide d'un mélangeur à cisaillement élevé (Ultra-Turrax T25). Une fois la solution homogène obtenue, la pâte a été épaissie à l'aide d'un épaississant cellulosique. La même pâte, lorsqu'elle est préparée sans dioléate de PEG300, avait entraînée une émulsion cassée et une formulation instable.

Les revêtements ont été appliqués avec une épaisseur de 100 µm sur une surface textile, séchés à 110 ° C pendant 2 minutes avant d'être gélifiés à 185 ° C pendant 2 minutes.

Le résultat a été un revêtement mat qui s'est rapidement biodégradé (en moins de 2 semaines lorsqu'il a été enfoui dans le sol).

### Exemple 5 Revêtement PLA avec cosolvent

| 70.88g d'eau | |
|---|---|
| 17.72g de 1-butanol | Cosolvent miscible à l'eau |
| 9.1g de radiasurf 7404 | Plastifiant/tensioactif |
| 9.1g de triacétine | Bioplastifiant |
| 42.2g de schularene N3102 (LyondellBasell) | PLA en poudre |
| 0.4g de tego airex 900 | Désaérateur |
| 0.3g de thixogum S (Nexira) | Épaississant cellulosique thixotrope |

70,88 g d'eau ont été ajoutés à un bêcher et du cosolvant (1-butanol) a été ajouté. Du radiasurf 7404 et de la triacétine ont été ajoutés avant d'ajouter la poudre de PLA. Une petite quantité de tego airex 900 a été ajoutée pour désaérer la formulation et du thixogum S a été ajouté pour épaissir la formulation.

La pâte de revêtement a été appliquée sur un tissu en lin d'une épaisseur de 400 µm. Le revêtement a été séché à 110 ° C pendant 2 minutes avant d'être gélifié à 190 ° C pendant 3 minutes.

La surface des revêtements avec des cosolvants a été comparée à des revêtements où aucun cosolvant n'était utilisé et il a été observé que des particules plus lisses et arrondies étaient obtenues avec le cosolvant, favorisant ainsi une meilleure gélification.

Il doit être entendu que bien que des modes de réalisation préférés, des constructions et configurations spécifiques, ainsi que des matériaux, aient été discutés ici pour les dispositifs selon la présente invention, divers changements ou modifications de forme et de détail peuvent être effectués sans sortir du cadre de cette invention. Des étapes peuvent être ajoutées ou supprimées aux procédés décrits dans le cadre de la présente invention.

## Revendications

1. Utilisation d'une dispersion pour le revêtement de textiles, ladite dispersion comprenant une poudre dispersée dans un milieu aqueux, ladite poudre comprenant un biopolymère thermoplastique plastifié avec un acide gras éthoxylé et un plastifiant différent dudit acide gras éthoxylé.

2. Utilisation selon la revendication 1, dans laquelle le biopolymère thermoplastique est choisi parmi un acide polylactique, un polyhydroxyalcanoate, et leurs mélanges.

3. Utilisation selon la revendication 2, dans laquelle le biopolymère thermoplastique comprend un mélange d'un polyhydroxyalcanoate et d'un acide polylactique dans lequel le polyhydroxyalcanoate représente au plus 40% en poids.

4. Utilisation selon l'une quelconque des revendications précédentes, dans laquelle le plastifiant différent dudit acide gras éthoxylé est d'origine biologique.

5. Utilisation selon la revendication 4, dans laquelle le plastifiant d'origine biologique est choisi parmi la triacétine, un ester d'acide citrique, un éther d'ester d'acide citrique, un ester d'acide levulinique, un mono- ou diglycéride acétylé, un ester d'acide adipique, un polyéthylène glycol, et leurs mélanges.

6. Utilisation selon l'une quelconque des revendications précédentes, dans laquelle l'acide gras éthoxylé est un monooléate de polyéthylène glycol.

7. Utilisation selon l'une quelconque des revendications précédentes, dans laquelle l'acide gras éthoxylé a une masse moléculaire de 450 à 1800 g/mol.

8. Utilisation selon l'une quelconque des revendications précédentes, dans laquelle l'acide gras éthoxylé représente de 40 à 60% en poids de l'ensemble comprenant l'acide gras éthoxylé et le plastifiant différent de l'acide gras éthoxylé.

9. Utilisation selon l'une quelconque des revendications précédentes, dans laquelle l'ensemble comprenant l'acide gras éthoxylé et le plastifiant différent de l'acide gras éthoxylé représente de 4 à 70% en poids de la dispersion.

10. Utilisation selon l'une quelconque des revendications précédentes, dans laquelle le biopolymère thermoplastique représente de 10 à 80% en poids de la dispersion.

11. Utilisation selon l'une quelconque des revendications précédentes, dans laquelle l'eau représente de 10 à 85% en poids de la dispersion.

12. Utilisation selon l'une quelconque des revendications précédentes pour le revêtement de textiles par calandrage ou sérigraphie.

13. Un procédé de revêtement d'un substrat textile comprenant l'application sur ledit substrat d'une dispersion comprenant une poudre dispersée dans un milieu aqueux, ladite poudre comprenant un biopolymère thermoplastique plastifié avec un acide gras éthoxylé et un plastifiant différent dudit acide gras éthoxylé.

14. Un revêtement sur un substrat textile, comprenant un biopolymère thermoplastique plastifié avec un acide gras éthoxylé et un plastifiant différent dudit acide gras éthoxylé.

15. Un substrat textile revêtu d'un revêtement selon la revendication 14.

## Patentansprüche

1. Verwendung einer Dispersion für die Beschichtung von Textilien, wobei die Dispersion ein in einem wässrigen Medium dispergiertes Pulver umfasst, wobei das Pulver ein mit einer ethoxylierten Fettsäure plastifiziertes thermoplastisches Biopolymer und einen von der ethoxylierten Fettsäure unterschiedlichen Weichmacher umfasst.

2. Verwendung nach Anspruch 1, wobei das thermoplastische Biopolymer aus einem Polylactid, einem Polyhydroxyalcanoat und deren Gemischen ausgewählt ist.

3. Verwendung nach Anspruch 2, wobei das thermoplastische Biopolymer ein Gemisch aus einem Polyhydroxyalcanoat und einem Polylactid umfasst, wobei das Polyhydroxyalcanoat höchstens 40 Gew.-% darstellt.

4. Verwendung nach einem der vorstehenden Ansprüche, wobei der von der ethoxylierten Fettsäure unterschiedliche Weichmacher biologischen Ursprungs ist.

5. Verwendung nach Anspruch 4, wobei der Weichmacher biologischen Ursprungs aus Triacetin, einem Zitronensäureester, einem Zitronensäureesterether, einem Lävulinsäureester, einem acetylierten Mono- oder Diglycerid, einem Adipinsäureester, einem Polyethylenglycol und deren Gemischen ausgewählt ist.

6. Verwendung nach einem der vorstehenden Ansprüche, wobei die ethoxylierte Fettsäure ein Polyethylenglycol-Monooleat ist.

7. Verwendung nach einem der vorstehenden Ansprüche, wobei die ethoxylierte Fettsäure eine Molekülmasse von 450 bis 1800 g/mol aufweist.

8. Verwendung nach einem der vorstehenden Ansprüche, wobei die ethoxylierte Fettsäure 40 bis 60 Gew.-% der Gesamtheit, umfassend die ethoxylierte Fettsäure und den von der ethoxylierten Fettsäure unterschiedlichen Weichmacher, darstellt.

9. Verwendung nach einem der vorstehenden Ansprüche, wobei die Gesamtheit, umfassend die ethoxylierte Fettsäure und den von der ethoxylierten Fettsäure unterschiedlichen Weichmacher, 4 bis 70 Gew.-% der Dispersion darstellt.

10. Verwendung nach einem der vorstehenden Ansprüche, wobei das thermoplastische Biopolymer 10 bis 80 Gew.-% der Dispersion darstellt.

11. Verwendung nach einem der vorstehenden Ansprüche, wobei das Wasser 10 bis 85 Gew.-% der Dispersion darstellt.

12. Verwendung nach einem der vorstehenden Ansprüche für die Beschichtung von Textilien durch Kalandrieren oder Siebdruck.

13. Ein Verfahren zur Beschichtung eines Textilsubstrats, umfassend das Auftragen einer Dispersion, die ein in einem wässrigen Medium dispergiertes Pulver umfasst, auf das Substrat, wobei das Pulver ein mit einer ethoxylierten Fettsäure plastifiziertes thermoplastisches Biopolymer und einen von der ethoxylierten Fettsäure unterschiedlichen Weichmacher umfasst.

14. Eine Beschichtung auf einem Textilsubstrat, umfassend ein mit einer ethoxylierten Fettsäure plastifiziertes thermoplastisches Biopolymer und einen von der ethoxylierten Fettsäure unterschiedlichen Weichmacher.

15. Ein Textilsubstrat, das mit einer Beschichtung nach Anspruch 14 beschichtet ist.

## Claims

1. Use of a dispersion for coating textiles, said dispersion comprising a powder dispersed in an aqueous medium, said powder comprising a thermoplastic biopolymer plastified with an ethoxylated fatty acid and a plasticizer different from said ethoxylated fatty acid.

2. Use according to Claim 1, wherein said thermoplastic biopolymer is selected from polylactic acid, polyhydroxyalkanoate, and mixtures thereof.

3. Use according to Claim 2, wherein said thermoplastic biopolymer comprises a mixture of polyhydroxyalkanoate and polylactic acid in which the polyhydroxyalkanoate represents at most 40% by weight.

4. Use according to any of the preceding claims, wherein said plasticizer different from said ethoxylated fatty acid is of biological origin.

5. Use according to Claim 4, wherein said plasticizer of biological origin is selected from triacetin, a citric acid ester, a citric acid ester ether, a levulinic acid ester, an acylated monoglyceride or diglyceride, an adipic acid ester, polyethylene glycol, and mixtures thereof.

6. Use according to any of the preceding claims, wherein said ethoxylated fatty acid is a polyethylene glycol monooleate.

7. Use according to any of the preceding claims, wherein said ethoxylated fatty acid has a molecular weight of 450 to 1800 g/mol.

8. Use according to any of the preceding claims, wherein said ethoxylated fatty acid represents from 40 to 60% by weight of the set comprising said ethoxylated fatty acid and said plasticizer different from said ethoxylated fatty acid.

9. Use according to any of the preceding claims, wherein said set comprising said ethoxylated fatty acid and said plasticizer different from said ethoxylated fatty acid represents from 4 to 70% by weight of the dispersion.

10. Use according to any of the preceding claims, wherein said thermoplastic biopolymer represents from 10 to 80% by weight of the dispersion.

11. Use according to any of the preceding claims, wherein said water represents from 10 to 85% by weight of the dispersion.

12. Use according to any of the preceding claims for coating textiles by calendering or screen printing.

13. A process for coating a textile substrate comprising applying to said substrate a dispersion comprising a powder dispersed in an aqueous medium, said powder comprising a thermoplastic biopolymer plastified with an ethoxylated fatty acid and a plasticizer different from said ethoxylated fatty acid.

14. A coating on a textile substrate, comprising a thermoplastic biopolymer plastified with an ethoxylated fatty acid and a plasticizer different from said ethoxylated fatty acid.

15. A textile substrate coated with a coating according to Claim 14.
